## Europäisches Patentamt

## European Patent Office

## Office européen des brevets

(11) Veröffentlichungsnummer: **0 247 572 B1**

(12) **EUROPÄISCHE PATENTSCHRIFT**

(45) Veröffentlichungstag der Patentschrift:
22.11.90

(51) Int. Cl.⁵: **B24D 13/10, B23P 13/00**

(21) Anmeldenummer: 87107625.3

(22) Anmeldetag: 26.05.87

(54) Verfahren und Werkzeug zur Bearbeitung der Oberflächen von Werkstücken.

(30) Priorität: 30.05.86 DE 3618315

(43) Veröffentlichungstag der Anmeldung:
02.12.87 Patentblatt 87/49

(45) Bekanntmachung des Hinweises auf die Patenterteilung:
22.11.90 Patentblatt 90/47

(84) Benannte Vertragsstaaten:
AT ES FR GB IT SE

(56) Entgegenhaltungen:
DE-B- 2 308 258
US-A- 2 453 339
US-A- 4 286 416

technica 8/1982, S. 601-606 u. 703
VDI-ZEITSCHRIFT, June 1986, Band 128, "Bürsten
gehonter Oberflächen." Seite 439

(73) Patentinhaber: KADIA-Maschinenbau Kopp GmbH &
Co., Fabrikstrasse 2, D-7440 Nürtingen(DE)

(72) Erfinder: Flores, Gerhard, Gartenstrasse 39,
D-7302 Ostfildern 3(DE)
Erfinder: Dörfel, Johannes, Beethovenstrasse 1,
D-7303 Neuhausen(DE)

(74) Vertreter: Dreiss, Hosenthien & Fuhlendorf,
Gerokstrasse 6, D-7000 Stuttgart 1(DE)

**Beschreibung**

Die Erfindung betrifft ein Verfahren zur Bearbeitung zylindrischer Kolbenlaufbahnen in Werkstücken aus Gußeisen, bei dem die Oberfläche gehont wird, wobei während des Honens dem Honwerkzeug gleichzeitig in axialer wie in Drehrichtung eine Relativbewegung zum Werkstück erteilt und damit eine bestimmter Honwinkel definiert wird.

Jede durch Honen bearbeitete Oberfläche hat, bei entsprechender Vergrößerung, eine aufgepflügte und zerklüftete Struktur. Dies gilt auch für gehonte Bohrungen mit hoher Oberflächengüte. Einzelne Werkstoffpartikel in der Größe von einigen Mikrometern sind oft nur lose mit dem Grundwerkstoff verbunden. Ferner findet man zahlreiche bereits abgetrennte Werkstoffpartikel derselben Größe, die ausschließlich durch Adhäsion an der Werkstückoberfläche haften. Die Oberfläche zeigt ferner sich überlappende und ausgerissene Schnittspuren mit einem teilweise flächigen Grat (sog. Blechmantel).

Diese Oberflächenstruktur ist für die Funktion des Bauteils im betriebsfähigen Aggregat im Zusammenwirken mit dem Reibungspartner besonders während der Einlaufphase außerordentlich schädlich, da ein Lösen der Partikel schon nach den ersten Bewegungen (bei Führung eines Kolbens in einer Bohrung: nach den ersten Kolbenhüben) zu erwarten ist. Dies verursacht erhöhten Verschleiß, besonders in der Einlaufphase (vgl. Aufsatz «Zylinderlaufflächen-Honqualität», Firmenveröffentlichung der Fa. Mahle, 7000 Stuttgart, Kolloquium 5/1977, S. 64/65; Firmenschrift der Fa. Goetzewerke Friedrich Goetze AG, 5673 Burscheid. Der Kolbenring, Drucksache 944/9.73 (September 1973), S. 4, Bild 2 und S. 7, Veröffentlichung «Fachbriefe in Jahresübersichten: Honen», VDI-Z 125 (1983) Nr. 14,595 ff., insbesondere S. 596, rechte Spalte und S. 597; Aufsatz «Plateauhonen von Kolbenlaufbahnen, Teil 1» MTZ Motertechnische Zeitschrift 46 (1985) 1, 29 ff., insbesondere S. 31/32).

Man hat bereits versucht, gehonte Oberflächen durch weitere Arbeitsgänge zu verbessern, so durch anschließende Funkenerosion und sich daran wiederum anschließende erneute kurzzeitige Feinhonbearbeitung (Europäische Patentanmeldung 0 113 915) oder durch eine sich an das Honen anschließende Strahlung mit losem Schleifkorn (DE-OS 3 210 495). Beide Verfahren sind apparativ aufwendig, zeitraubend, kostenungünstig und daher ungeeignet für die Serienfertigung und führen noch nicht zu befriedigenden Ergebnissen.

Es ist bekannt, zum Entgraten Diamantbürsten zu verwenden (EP 0 072 374, siehe auch den Hinweis in technica 8/1982, S. 694). Diese sind derart ausgebildet, daß die Borsten mit einer Kappe aus Nickel als Trägermaterial überzogen sind, in welche Diamantpartikel derart eingebettet sind daß sie etwa zu 1/2 bis 1/3 aus der Oberfläche herausragen. Die Größe der «Kappen» am Ende der Borste ist dabei erheblich größer als der üblicherweise bei gehonten Flächen anzutreffende Abstand zweier benachbarter Profilspitzen. Derartige «Bürsten» sind jedoch zur Beseitigung der Blechmantelbildung nicht geeignet.

Ähnliches gilt für das sog. «Flex-Honen» («Werkstatt und Betrieb» 111 (1978) 3, siehe auch US-PS 3 871 139 entsprechend DE-PS 2 518 246, US-PS 4 286 416). Dabei sind am Ende von Nylonborsten Kügelchen mit einem Durchmesser von 3 bis 5 mm aus Bindematerial angebracht, in die Siliciumkarbidkörner eingebettet sind. Die Bearbeitung mit diesen Werkzeugen erfolgt nicht anschließend an das Honen zur Verbesserung der Oberflächenqualität; sie dient vielmehr zum Aufrauhen der Zylinder bei Benzin- und Dieselmotoren, wenn bei einer Zwischenüberholung oder Reparatur neue Kolbenringe montiert werden. Durch diese Aufrauhung begünstigt man die Ölhaftung an den Zylinderwänden beim Einlaufen. Das Flexhonen schafft ein neues Kreuzschliffmuster mit neuen Riefen und Verschuppungen. Das «Flex-Honen» ist somit eine Alternative zum «normalen» Honen; zur weiteren Verbesserung der Oberfläche einer bereits durch Honen bis zur äußersten damit erreichbaren Qualität bearbeiteten Oberfläche ist das «Flex-Honen» nicht geeignet.

Es ist demgemäß Aufgabe der vorliegenden Erfindung, ein verbessertes Verfahren zur Bearbeitung von Oberflächen an Werkstücken, die bereits gehont worden sind, sowie ein Werkzeug dafür zu schaffen. Dabei soll insbesondere eine weitere Qualitätsverbesserung zur Reduzierung des Einlaufverschleißes erreicht werden. Dabei sollen der sog. Blechmantel und nach dem Honen noch an der Oberfläche haftende Werkstoffpartikel abgetragen werden. Dabei wünscht man eine möglichst geringe Verformungstiefe und eine möglichst große Graphitfreilegung bei Erhöhung des Traganteils der bearbeiteten Oberfläche bzw. Bohrung.

Erfindungsgemäß wird diese Aufgabe dadurch gelöst, daß die Oberfläche anschließend mit einer Bürste bearbeitet wird und die Bearbeitung mit der Bürste unter Beibehaltung des für das vorhergehende Honen gewählten Verhältnisses der Relativbewegung in axialer und in Drehrichtung erfolgt, wobei die Durchmesser der Borsten kleiner als der durchschnittliche Abstand der Nachbarprofilspitzen der zu bearbeitenden Oberfläche ist (Anspruch 1). Ein für diesen Verfahrensschritt geeignetes Werkzeug wird durch die Merkmale des Anspruchs 8 angegeben.

Vorteilhafte Weiterbildungen sind in den Unteransprüchen definiert. Die sich an das Honen erfindungsgemäß anschließende Bearbeitung des Bürstens, und zwar mit derselben Kinematik wie beim vorhergehenden Honen, ist deshalb besonders wirksam, weil die elastischen Borsten der Bürste sich der jeweiligen Topographie der zu bearbeitenden Oberflächen anpassen können. Die Struktur des Honbildes bleibt dabei vollständig erhalten. Durch das Bürsten werden jedoch die Erhebungen im Oberflächenprofil verrundet.

Die Bearbeitung durch Bürsten findet in den Profilvertiefungen, die beim Honen entstanden sind, statt, da sich das Werkzeug entsprechend der Kinematik des Honens im vorhergehenden Bearbeitungsvorgang bewegt. Der Durchmesser der Borsten sollte dabei kleiner sein als der durchschnittliche Abstand der Nachbarprofilspitzen in der zu bearbeitenden Oberfläche zueinander, so daß die Borsten in die Profilvertiefungen eindringen können.

Unabhängig vom Verschleißzustand der Bürste ist es vorteilhaft, die Bürstenvorspannung konstant zu halten, um Qualitätsschwankungen zu vermeiden. Ein Werkzeug zur Durchführung des Verfahrens weist daher vorteilhafterweise Nachstellmöglichkeiten, die entsprechend der Abnützung betätigbar sind, auf.

Das erfindungsgemäße Verfahren verbessert in frappierendem Maße die Gleiteigenschaften einer gehonten Bohrung, insbesondere während der Einlaufphase. Folgende Bearbeitungsfälle kommen in Betracht: Kolbenlaufbahnen, insbesondere bei Hydraulikpumpen; Hydrauliksteuerbohrungen; Kompressorzylinder bei normal- und plateaugehonten Verbrennungsmotoren. Es erfolgt dabei insbesondere eine Glättung der tragenden Struktur und somit eine Erhöhung des Traganteils bei geringer Schnittiefe.

Letztlich entsteht durch die erfindungsgemäße Kombination von Honen und Bürsten ein geglättetes rundkämmiges Oberflächenprofil. Das Verfahren ergibt auch eine weitgehend blechmantelfreie Oberfläche, die sich insbesondere dadurch auszeichnet, daß - bei Bearbeitung von Werkstücken aus Gußeisen - die Graphitlamellen nicht durch Werkstoffüberlappungen und Verformungen verschlossen werden.

Ein Ausführungsbeispiel wird im folgenden unter Bezugnahme auf die beigefügten Zeichnungen näher beschrieben. Es stellen dar:

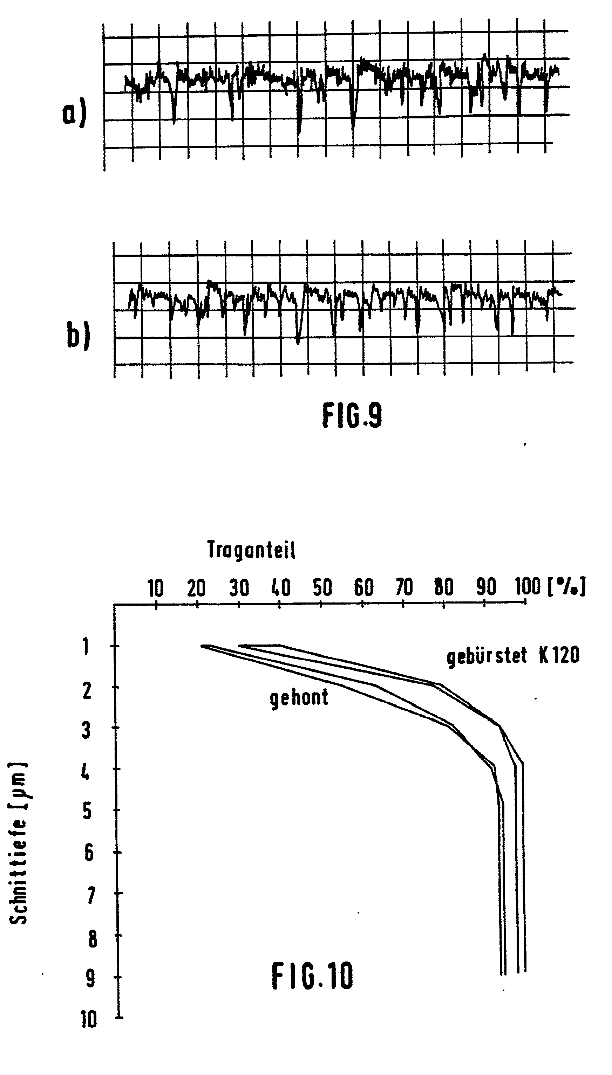

Figur 1 ein Werkzeug;
Figur 2 einen Schnitt entlang der Linie II-II in Fig. 1;
Figur 3 einen Schnitt entlang der Linie III-III in Fig. 1;
Figur 4 eine schematische Darstellung benachbarter Profilspitzen der zu bearbeitenden Oberfläche mit den Borsten einer Bürste;
Figur 5 eine gehonte Oberfläche;
Figur 6 die Oberfläche nach Fig. 5, jedoch nach dem sich an das Honen anschliessende Bürsten;
Figur 7 eine gehonte Oberfläche (senkrecht geschnitten) mit Darstellung der Graphitlamellen;
Figur 8 dieselbe Oberfläche wie Fig. 7, jedoch nach dem sich an das Honen anschliessende Bürsten;
Figur 9(a) und 9(b)
Profilaufzeichnungen für eine gehonte Oberfläche vor (Fig. 9a) bzw. nach dem (Fig. 9b) sich an das Honen anschliessende Bürsten;
Figur 10 die Abhängigkeit des Traganteils von der Schnittiefe bei mit und ohne sich an das Honen anschließende Bürsten.

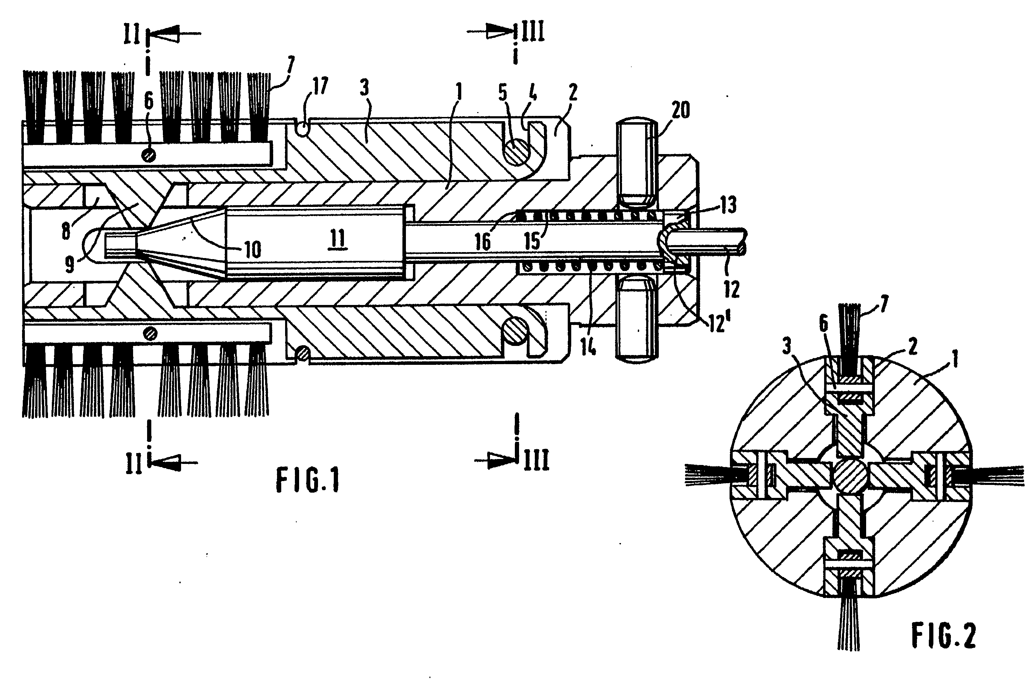

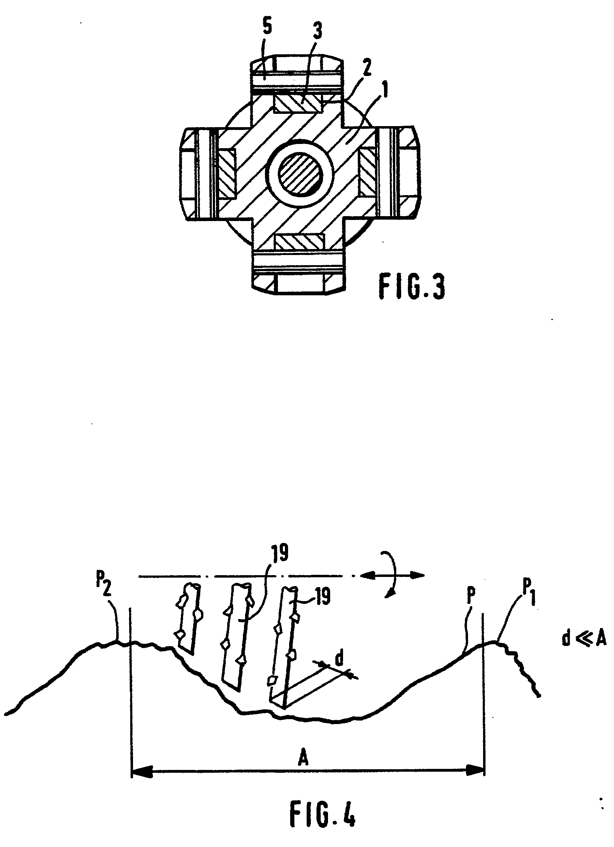

Das Werkzeug nach Fig. 1 bis 3 wird gebildet durch einen Werkzeugkörper 1, der im Querschnitt (vgl. Fig. 3) kreuzförmig ist. In jedem der vier Schenkel dieser Kreuzform befindet sich ein Schlitz 2. In jedem Schlitz 2 ist eine Bürstenleiste 3 angeordnet. Jede Bürstenleiste 3 weist an ihrem (in Fig.

1) rechten Ende eine Kehle 4 auf. Mit der Kehle 4 ist die Bürstenleiste 3 am Zapfen 5 eingehängt und somit in radialer Richtung nach außen schwenkbar. An ihrem linken Ende trägt die Bürstenleiste 3, mittels Stift 6 befestigt, eine Bürste 7. Durch eine Öffnung 8 im Werkzeugkörper 1 hindurch erstreckt sich ein an der Bürstenleiste 3 vorgesehener Steuernocken 9, der an der konischen Steuerfläche 10 der Steuerstange 11 anliegt. Wird die Steuerstange 11 gegenüber dem Werkzeugkörper 1 durch einen Druckstift 12 nach links bewegt, so drückt die konische Steuerfläche 10 die vier Steuernocken 9 und damit die vier Bürstenleisten 3 radial nach außen. Der Druckstift 12 wirkt auf den Deckel 13 der Steuerstange 11. Der Druckstift ist in bekannter Weise Bestandteil der Steuereinrichtung einer Honmaschine zum Steuern der Expansion üblicher Honwerkzeuge.

Die Steuerstange 11 wird in der gezeigten Ausgangslage durch eine zylindrische Feder 14 gehälten, die in einer Ausnehmung 15 im Werkzeugkörper angeordnet ist und deren eines Ende sich an der Schulter 16 und deren anderes Ende sich am Deckel 13 abstützt. Dadurch wird die Steuerstange 11 in Fig. 1 nach rechts gezogen. Eine Steuerbewegung des Druckstücks 12 nach links wirkt diesem Druck entgegen. Die Bürstenleisten 3 werden durch einen Federring 17 links von ihrem Drehpunkt, der in der Achse der Stifte 5 liegt, zusammengehalten und mit ihrem Steuernocken 9 gegen die konische Steuerfläche 10 gedrückt. Am rechten Ende des Werkzeugkörpers befinden sich Bolzen 20, die zur Aufnahme des Werkzeugs in einer Honmaschine bestimmt sind. Die Anpassung der Werkzeugeinspann- und Steuermöglichkeiten (Bolzen 18, Ausnehmung 12' im Deckel 13 für den Eingriff des Druckstücks 12) sind an die Werkzeugaufnahme einer Honmaschine angepaßt, um das Werkzeug mit der Kinematik des Honwerkzeuges beim vorgesehenen Honen, also mit derselben Kinematik wie das Honwerkzeug im vorhergehenden Arbeitsgang, betreiben zu können.

Der Durchmesser der Borsten der Bürste 7 muß in Abhängigkeit von der Rauhigkeit der zu bearbeitenden Oberfläche, also in Abhängigkeit von der Rauhigkeit des im vorhergehenden Arbeitsgang gehonten Profils gewählt werden. Je feiner die Oberfläche ist, umso dünner müssen die Borsten sein. Dies ist notwendig, um auch im Bereich der Profilvertiefungen bürsten zu können. Dies ist in Fig. 4 erläutert. P ist das Profil der gehonten Oberfläche, A der Abstand zweier benachbarter Profilspitzen $P_1$ und $P_2$ voneinander. Die diamantbesetzten Borsten 19 der Bürste 7 haben einen Durchmesser d. Er sollte kleiner sein als der Abstand A. Bei Verwendung von Schleifnylonborsten ist bei feiner Oberfläche P ebenfalls eine feinere Korngröße zu wählen. d ist kleiner als 1/10 mm; damit sind die Borsten erheblich kleiner als bei Bürsten oder Bürstwerkzeugen, wie sie zum Entgraten verwendet werden.

Unabhängig vom Verschleißzustand der Bürste muß die Bürstenvorspannung, d.h. der Anpreßdruck der Borsten gegen die zu bearbeitende Oberfläche, konstant gehalten werden, um keine Qualitätsschwankungen der bearbeiteten Oberfläche zuzulassen. Dem dient in dem beschriebenen Ausführungsbeispiel des Bürstenwerkzeugs die Nachstellmöglichkeit mittels Steuer stange 11. Es ergibt sich so die Möglichkeit einer wegbegrenzten formschlüssigen Zustellung.

Als Besatzwerkstoffe für die Borsten kommen alle üblichen Materialien, nämlich Stahl, Messing, Cu-Be-Verbindungen, Schleifnylon, diamantierter Stahldraht, usw., in Betracht.

Bei Anwendung des beschriebenen Verfahrens ist darauf zu achten, daß die Borsten in Richtung der Honschnittspuren bewegt werden, daß die gleichzeitige Dreh- und Hubbewegung in derselben Art und Weise wie beim vorhergehenden Honen erfolgt. Es ist also erforderlich, daß das Bürsten entlang denselben Honschnittspuren erfolgt, die für ein bestimmtes Werkstück durch die vorhergehende Honbearbeitung entstanden sind. Dies ist nur dann gewährleistet, wenn das Werkzeug in derselben Maschine mit derselben Kinematik betrieben wird. Mit der Bezeichnung "dieselbe Kinematik" ist gemeint, daß Dreh- und Hubbewegung miteinander denselben Honwinkel ergeben, mit dem im vorhergehenden Arbeitsgang gehont wurde. Die resultierende Schnittgeschwindigkeit liegt bei ca. 40 m/Min. In der Regel benötigt man nur wenige Doppelhübe für das Bürsten.

Bei der Bearbeitung muß mit einem großzügig bemessenen Kühlmittelstrom (Honöl) gearbeitet werden, um die abgetragenen Mikropartikel von der Werkstückoberfläche wegzutransportieren.

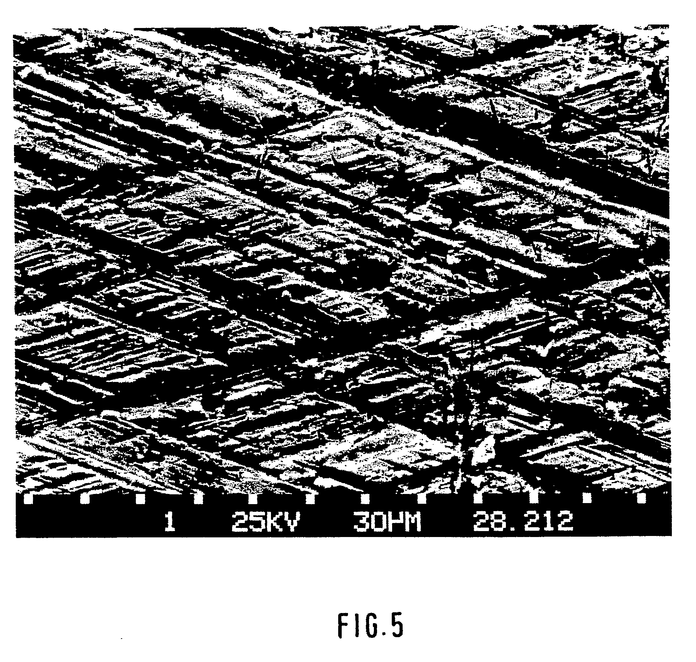

Fig. 5 zeigt die gehonte Oberfläche einer Graugußzylinderbüchse vor dem nachfolgenden Bürsten. Die Aufnahme ist etwa 450-fach vergrößert. Die mit dem Tastschnittverfahren ermittelte Rauheit lag bei 4-5 Mikrometer Rz. Das Honen wurde mit einem porösen SiC-Honstein der Härte 4 bei einem niedrigen Steinanpreßdruck von 5 daN/cm² durchgeführt. Die "Blechmantelbildung" ist deutlich zu erkennen.

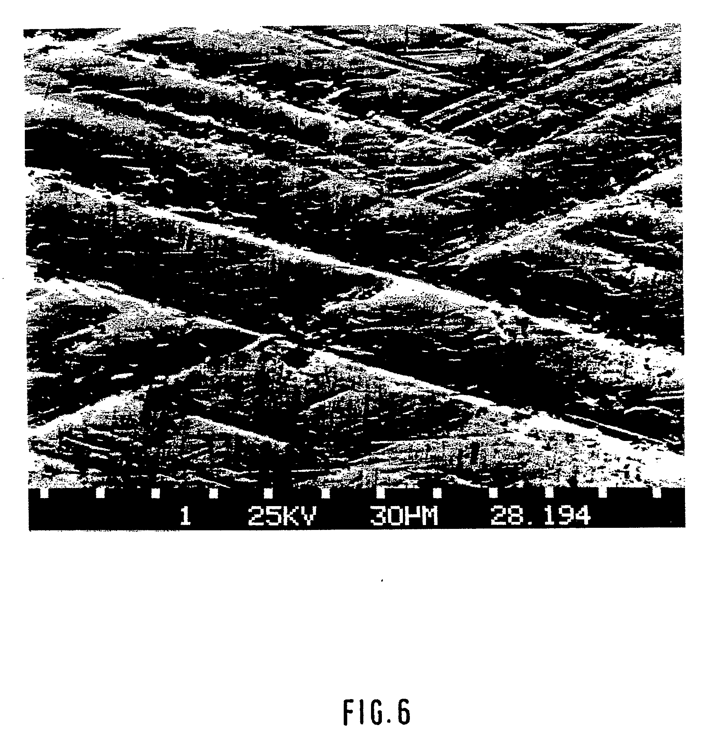

Dieselbe Oberfläche wurde anschließend gebürstet. Es ergab sich nach dem Bürsten die Oberfläche nach Fig. 6. Die bereits beim Honen erreichte Qualität der Bohrung bezüglich Maßgenauigkeit, Rundheit und Zylinderform bleibt vollständig erhalten. Ebenso bleibt die Struktur des Honbildes, d.h. der Kreuzschliff, erhalten. Durch das Bürsten werden jedoch die Erhebungen im Oberflächenprofil verrundet. Der Blechmantel bzw. die Verschuppungen sind abgetragen (wie in den Fotografien angegeben, entspricht 1 cm etwa 30 Mikrometer).

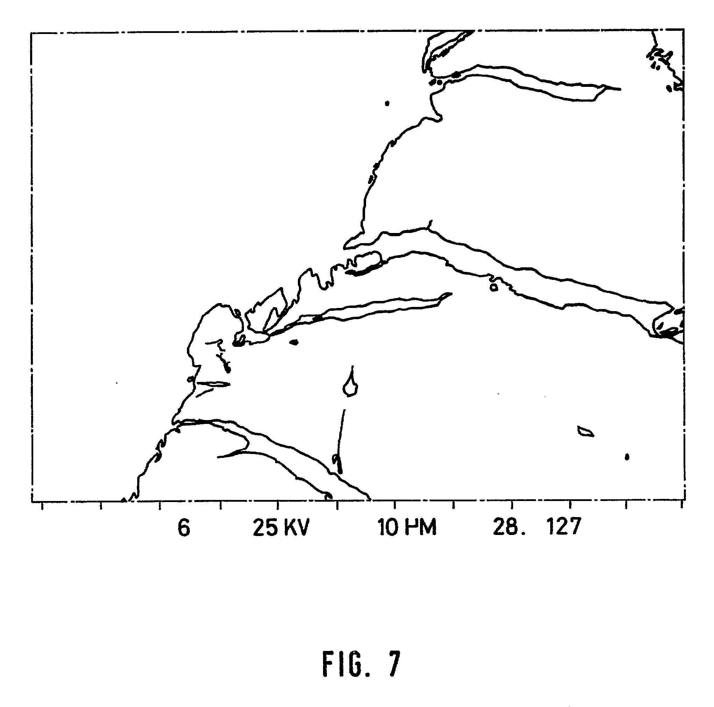

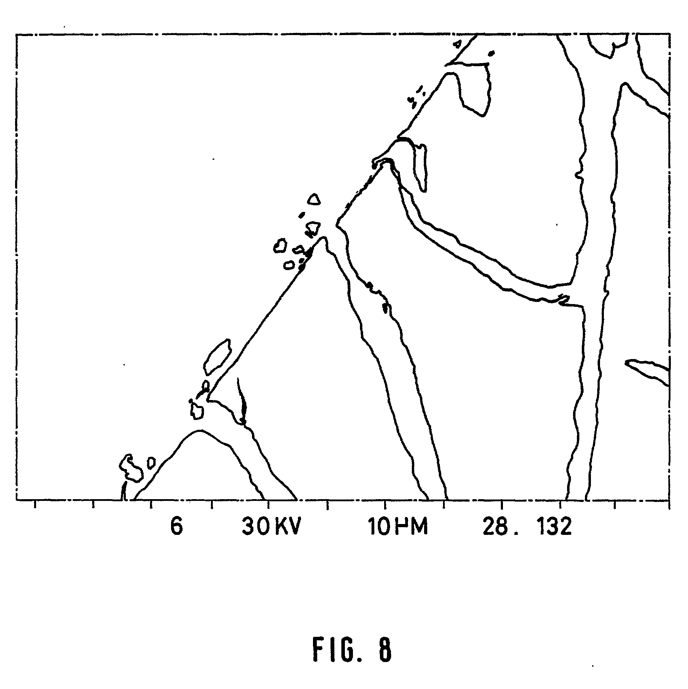

Die Figuren 7 und 8 zeigen die Bedeutung des Verfahrensschrittes "Bürsten" nach dem Honen anhand einer Darstellung von Verformungstiefe und Graphitfreilegung. Verformungstiefe ist die Schnittiefe, bis zu der bei Gußeisen eine Graphitlamelle durch Verformung beeinflußt wird. Die Graphitfreilegung bezeichnet das Verhältnis der geschlossenen zu den offenen Graphitlamellen.

Man wünscht eine möglichst hohe Anzahl von Graphitlamellen, die bis zur bearbeiteten Fläche offen verlaufen, d.h. ohne durch die Verformung des umgebenden Materials bei der Bearbeitung zugepreßt zu sein. Fig. 7 zeigt im Querschnitt das Profil einer Fläche (die senkrecht zur Ebene der Fotografie verläuft), die nur gehont worden ist, und zwar mit einer Korngröße D 35. Die Bearbeitung erfolgt durch das sog. "Plateau"-Honen (Honen mit geringer Zustellung, so daß nur die Profilspitzen abgetragen werden; vgl. G. Flores, Plateauhonen, MTZ Heft 1+3/1985). Anschließend erfolgte die Bearbeitung durch Bürsten mit Korngröße K 500. Dabei ergab sich, wie Fig. 8 zeigt, daß die Verformungstiefe der bearbeiteten Oberfläche von 15 Mikrometer auf 8 Mikrometer (und kleiner) verbessert wurde. Die Graphitfreilegung wurde von 30 % auf 47 % verbessert.

Die Fig. 9 (a) bzw. (b) zeigen das Profil nach dem Honen (9a) und nach nachfolgendem Bürsten. Das Bürsten erfolgte mit Schleifnylon SIC der Körnung K 500. Der Abstand zweier benachbarter Rasterlinien in Fig. 9 entspricht in x-Richtung 250 Mikrometer und in y-Richtung 2 Mikrometer. Die Oberflächenverbesserung ist deutlich zu erkennen.

Fig. 10 zeigt die Verbesserung des "Traganteils" einer gebürsteten Oberfläche. Der Traganteil ergibt sich in bekannter Weise aus der Abbott'schen Tragkurve (Profiltraganteilkurve). Dies ist derjenige Anteil der bearbeiteten Oberfläche, der bei der späteren Nutzung mit einem Reibungspartner (also etwa einem Kolben oder einem Steuerschieber) zusammenwirkt. Fig. 10 quantifiziert die Verbesserung des Traganteils in Abhängigkeit der Schnittiefe bei einem Radialkolbenpumpengehäuse. Die erzielbaren Verbesserungen sind erheblich.

**Patentansprüche**

1. Verfahren zur Bearbeitung von zylindrischen Kolbenlaufbahnen in Werkstücken aus Gußeisen, dei dem die Oberfläche gehont wird, wobei während des Honens dem Honwerkzeug gleichzeitig in axialer wie in Drehrichtung eine Relativbewegung zum Werkstück erteilt und damit ein bestimmter Honwinkel definiert wird, dadurch gekennzeichnet, dass zur Beseitigung des Blechmantels die Oberfläche anschliessend mit einer Bürste (7) bearbeitet wird und die Bearbeitung mit der Bürste unter Beibehaltung des für das vorhergehende Honen gewählten Verhältnisses der Relativbewegung in axialer und in Drehrichtung erfolgt, wobei der Durchmesser der Borsten kleiner als der durchschnittlich Abstand der Nachbarprofilspitzen der zu bearbeitenden Oberfläche ist.

2. Verfahren nach Anspruch 1, dadurch gekennzeichnet, daß der Durchmesser der Borsten der Bürste größer als 0,01 mm und höchstens 0,1 mm ist.

3. Verfahren nach Anspruch 1 oder 2, bei dem während des Honens dem Honwerkzeug gleichzeitig in axialer wie in Drehrichtung eine Relativbewegung zum Werkstück erteilt und damit ein bestimmter Honwinkel definiert wird, dadurch gekennzeichnet, daß die Bearbeitung mit der Bürste (7) unter Beibehaltung des für das vorhergehende Honen gewählten Verhältnisses der Relativ-Bewegung in axialer und in Drehrichtung mit demselben Honwinkel und unter Beibehaltung derselben Zustellbewegung erfolgt.

4. Verfahren nach Anspruch 1, 2 oder 3, dadurch gekennzeichnet, daß die Bearbeitung mit einer Bürste bei Zufuhr eines Kühlmittelstroms erfolgt.

5. Verfahren nach Anspruch 1 oder einem der folgenden, dadurch gekennzeichnet, daß das Bürsten mit einer Geschwindigkeit von bis zu ca. 40 m/min. bei zwei bis fünf Doppelhüben erfolgt.

6. Verfahren nach Anspruch 1 oder einem der folgenden, dadurch gekennzeichnet, daß das Bürsten mit konstantem Anpreßdruck erfolgt.

7. Verfahren nach Anspruch 5, dadurch gekennzeichnet, daß das Bürsten mit konstanter Zustellung der Bürste auf die zu bearbeitende Oberfläche erfolgt.

8. Werkzeug zur Behandlung zylindrischer Kolbenlaufbahnen in aus Gußeisen hergestellten Werkstücken nach dem Honen, mit einem Borsten tragenden Werkzeugkörper (1), wobei das Werkzeug mit seinem zur Einspannung bestimmten Ende zur Aufnahme in eine Honmaschine ausgebildet ist, dadurch gekennzeichnet, daß an dem Werkzeugkörper (1) mehrere Bürsten (7) tragende Leisten (3) angeordnet sind, und der Durchmesser der Borsten (19) kleiner als der durchschnittliche Abstand der Nachbarprofilspitzen der zu bearbeitenden Oberfläche ist, höchstens jedoch 0,1 mm beträgt.

9. Werkzeug nach Anspruch 7, dadurch gekennzeichnet, daß es zur Einspannung senkrecht zur Längsachse verlaufende Bolzen (20) aufweist.

10. Werkzeug nach Anspruch 7 oder 8, dadurch gekennzeichnet, daß die Leisten (3) am Werkzeugkörper (1) nach außen radial und achsparallel verschiebbar sind und Steuernocken (9) aufweisen, die durch Spanneinrichtungen (17) gegen eine Steuerfläche (10) an einer Steuerstange (11) gedrückt werden, die im Werkzeugkörper (1) angeordnet und durch Steuereinrichtungen (12) verschiebbar ist.

11. Werkzeug nach Anspruch 7, dadurch gekennzeichnet, daß die Steuerstange (11) durch eine Feder (14) in ihre Ausgangslage gedrückt wird.

12. Werkzeug nach Anspruch 9, dadurch gekennzeichnet, daß die schwenkbare Anordnung der Leisten (3) im Werkzeugkörper (1) dadurch erfolgt, daß die Leisten (3) je eine Kehle (4) aufweisen, mit der sie an einem Zapfen (5) eingehängt sind, der im Werkzeugkörper angeordnet ist.

13. Werkzeug nach Anspruch 11, dadurch gekennzeichnet, daß die Leisten (3) in Schlitzen (2) im Werkzeugkörper (1) angeordnet sind.

## Claims

1. A method of treating cylindrical piston running surfaces in workpieces made of cast iron wherein the surface is honed, where during the honing operation the honing tool is given a movement relative to the workpiece simultaneously in the axial and circumferential directions and in this way a specific honing angle is defined, characterised in that for the removal of the metal shell the surface is then treated with a brush (7) and the treatment with the brush is carried out retaining the ratio of the relative movement in the axial and circumferential directions selected for the previous honing operation, where the diameter of the bristles is smaller than the average distance between the adjacent profile peaks of the surface to be treated.

2. A method as claimed in claim 1, characterised in that the diameter of the bristles of the brush is greater than 0.01 mm and is a maximum of 0.1 mm.

3. A method as claimed in claim 1 or 2, wherein during the honing operation the honing tool is given a movement relative to the workpiece simultaneously in the axial and circumferential directions and in this way a specific honing angle is defined, characterised in that the treatment with the brush (7) is carried out retaining the ratio of the relative movement in the axial and circumferential directions selected for the previous honing operation, with the same honing angle and retaining the same advance movement.

4. A method as claimed in claim 1, 2 or 3, characterised in that the treatment with a brush is carried out while supplying a coolant flow.

5. A method as claimed in claim 1 or one of the following claims, characterised in that the brushing is carried out at a speed of up to approximately 40 m/min with two to five double strokes.

6. A method as claimed in claim 1 or one of the following claims, characterised in that the brushing is carried out at a constant contact pressure.

7. A method as claimed in claim 5, characterised in that the brushing is carried out with a constant advance of the brush over the surface which is to be treated.

8. A tool for treating cylindrical piston running surfaces in workpieces produced from cast iron after the honing operation, comprising a tool body bearing bristles, where that end of the tool which is intended to be fixed is designed to be mounted in a honing machine, characterised in that strips (3) bearing a plurality of brushes (7) are arranged on the tool body (1) and the diameter of the bristles (19) is less than the average distance between the adjacent profile peaks of the surface which is to be treated, but at the maximum is 0.1 mm.

9. A tool as claimed in claim 7, characterised in that for fixing purposes it comprises bolts (20) which extend at right angles to the longitudinal axis.

10. A tool as claimed in claim 7 or 8, characterised in that the strips (3) on the tool body (1) can be outwardly displaced in the radial direction and in a direction parallel to their axis and comprise radial cams (9) which are pressed by clamping devices (17) against a control surface (10) on a control rod (11) which is arranged in the tool body (1) and can be displaced by control devices (12).

11. A tool as claimed in claim 7, characterised in that the control rod (11) is pressed into its starting position by a spring (14).

12. A tool as claimed in claim 9, characterised in that the swivelling arrangement of the strips (3) in the tool body (1) is achieved in that the strips (3) each comprise a channel (4) by which they are suspended from a pin (5) which is arranged in the tool body.

13. A tool as claimed in claim 11, characterised in that the strips (3) are arranged in slots (2) in the tool body (1).

## Revendications

1. Procédé permettant d'éviter la chemise en tôle dans l'usinage des glissières de piston cylindrique aménagées dans des blocs de fonte, dont la surface est rectifiée, un mouvement relatif par rapport à la pièce, étant conféré simultanément à l'outil de rectification aussi bien dans le sens axial que rotatif en cours de rectification, avec définition d'un certain angle de rectification, caractérisé par le fait que, pour éviter la chemise en tôle, la surface est traitée aussitôt après avec une brosse (7) et que le traitement avec la brosse est effectué tout en conservant les conditions choisies pour la rectification ci-dessus du mouvement relatif dans le sens axial et rotatif, le diamètre des poils de brosse étant inférieur à la distance moyenne des pointes profilées adjacentes à la surface destinée à être usinée.

2. Procédé selon la revendication 1, caractérisé par le fait que le diamètre des poils de la brosse est supérieur à 0,01 mm et atteint tout au plus 0,1 mm.

3. Procédé selon la revendication 1 ou 2, dans lequel un mouvement relatif par rapport à la pièce est conféré simultanément dans le sens axial et rotatif à l'outil de rectification en cours de rectification, permettant ainsi de définir un certain angle de rectification, caractérisé par le fait que l'usinage avec la brosse (7) est effectué en conservant les conditions choisies pour la rectification ci-dessus du mouvement relatif dans le sens axial et rotatif avec le même angle de rectification et en conservant le même mouvement d'avance.

4. Procédé selon les revendications 1, 2 ou 3, caractérisé par le fait que l'usinage est effectué avec une brosse avec apport d'un courant d'agent réfrigérant.

5. Procédé selon la revendication 1 ou l'une quelconque des revendications suivantes, caractérisé par le fait que le brossage est effectué à une vitesse atteignant 40 m/min environ, à raison de deux à cinq doubles courses.

6. Procédé selon la revendication 1 ou l'une des revendications suivantes, caractérisé par le fait que le brossage est effectué sous pression constante.

7. Procédé selon la revendication 5, caractérisé par le fait que le brossage est effectué avec une avance constante de la brosse sur la surface destinée à l'usinage.

8. Outil d'usinage après rectification, des glissières de piston cylindrique aménagées dans des blocs de fonte avec un corps d'outil portant des poils de brosse, permettant d'éviter la chemise en tôle, caractérisé par le fait que sur le corps d'outil (1) sont aménagées des barrettes (3) portant plusieurs brosses (7), l'outil qui comporte une extrémité destinée au serrage étant conçu pour être monté sur une rectifieuse, dans le but d'éviter la chemise en tôle, et que le diamètre des poils de brosse (19) est inférieur à la distance moyenne des pointes profilées adjacentes à la surface destinée à l'usinage, sans être toutefois supérieur à 0,1 mm.

9. Outil selon la revendication 7, caractérisé par le fait que des boulons (20) perpendiculaires à l'axe longitudinal sont prévus pour le serrage.

10. Outil selon la revendication 7 ou 8, caractérisé par le fait que les barrettes (3) montées sur le corps d'outil (1) sont mobiles vers l'extérieur radialement et parallèlement à l'axe et comportent des cames de commande (9) qui sont appuyées par des dispositifs de serrage (17) sur une surface de commande (10) aménagée sur une tige de commande (11), montée dans le corps de l'outil (1) et coulissant par l'intermédiaire des dispositifs de commande (12).

11. Outil selon la revendication 7, caractérisé par le fait que la tige de commande (11) est appuyée en position de départ par un ressort (14).

12. Outil selon la revendication 9, caractérisé par le fait que le pivotement des barrettes (3) dans le corps d'outil (1) résulte du fait que les barrettes (3) comportent chacune une cavité (4) dans laquelle elles sont accrochées à un tourillon aménagé dans le corps de l'outil.

13. Outil selon la revendication 11, caractérisé par le fait que les barrettes (3) sont montées dans les rainures (2) prévues dans le corps de l'outil (1).

FIG.1

FIG.2

FIG.3

$d \ll A$

FIG.4

FIG.5

FIG. 6

FIG. 7

FIG. 8

EP 0 247 572 B1

a)

b)

**FIG.9**

Traganteil

10  20  30  40  50  60  70  80  90  100 [%]

Schnittiefe [μm]

gebürstet K 120

gehont

**FIG.10**